# EUROPEAN PATENT APPLICATION

(11) **EP 3 506 559 A1**
(43) Date of publication of application: **03.07.2019**
(21) Application number: 17306975.8
(22) Date of filing: 29.12.2017
(51) Int. Cl.: H04L 9/32, H04W 12/06, H04W 12/10, H04W 12/04

(54) **METHOD, FIRST DEVICE, SECOND DEVICE AND SYSTEM FOR AUTHENTICATING A FIRST DEVICE TO A SECOND DEVICE**

(71) Applicant: GEMALTO SA, 92190 Meudon (FR)
(72) Inventor: TABAK, Danny, 13881 GEMENOS cedex (FR); JOSEFSSON, Johan, 13881 GEMENOS cedex (FR); VIGROUX, Gregory, 13881 GEMENOS cedex (FR)
(74) Representative: Grevin, Emmanuel

(57) **Abstract**

The invention relates to a method 20 for authenticating a first device 12 to a second device 16.

The method comprises:
- sharing 22 24 by the first device with the second device a secret key and a predetermined authentication data generation algorithm;
- generating 26, by the first device, first authentication data by using the authentication data generation algorithm and at least the secret key, as input to the authentication data generation algorithm;
- broadcasting 28, by the first device, the first authentication data;
- scanning 210, by the second device, broadcast data;
- generating, by the second device, second authentication data by using the authentication data generation algorithm and at least the secret key, as input to the authentication data generation algorithm;
- comparing 216, by the second device, the second authentication data to the broadcast first authentication data; and
- authenticating 220, by the second device, the first device only if the second authentication data matches the broadcast first authentication data

The invention also pertains to corresponding first device, second device and system for authenticating a first device to a second device.

## Description

### Field of the invention:

The invention relates generally to a method for authenticating a first device to a second device.

The present invention is notably applicable to a Bluetooth Low Energy (or BLE) (registered Trademark) enabled device, as a Short Range (or SR) Radio-Frequency (or RF) enabled device and a first or a second device. The first device and/or the second device may further cooperate with a chip, so as to access, through the chip, one or several services. The chip may be embedded within or removable, such as a chip included within a smart card or the like, as a Secure Element (or SE), from the second device, as a chip host device.

Within the present description, an SE is a smart object including a chip that protects, as a tamper resistant component, access to stored and processed data and is intended to communicate data with an SE host device, such as a mobile (tele)phone, a tablet, a Personal Computer (or PC), a Machine to Machine (or M2M) or an Internet of Things (or loT) device.

Moreover, the invention also pertains to a corresponding first device for authenticating to a second device and a corresponding second device for authenticating a first device.

Finally, the invention pertains to a system for authenticating a first device to a second device as well.

### State of the art:

It is known that a first BLE device broadcasts, according to the BLE protocol, a standard advertising packet, as data that allows identifying its broadcaster. Thus, any nearby BLE device that receives the broadcaster identifying data knows that the broadcaster is present in the close surrounding environment of the concerned BLE device that listens.

However, the broadcaster identifying data may be copied by any listening BLE device. Such a listening BLE device is able to replay by broadcasting the copied broadcaster identifying data to impersonate the first BLE device, when the first BLE device is not or no longer present.

There is a need to provide a solution that allows protecting a first device from a broadcaster identifying data copy attack by a fraudster and being thus impersonated.

### Summary of the invention:

The invention proposes a solution for satisfying the just herein above specified need by supplying a method for authenticating a first device to a second device. According to the invention, the method comprises:
- a1) sharing by the first device with the second device a secret key and a predetermined authentication data generation algorithm;
- b1) generating, by the first device, first authentication data by using the authentication data generation algorithm and at least the secret key, as input to the authentication data generation algorithm;
- c1) broadcasting, by the first device, the first authentication data;
- d1) scanning, by the second device, broadcast data;
- e1) generating, by the second device, second authentication data by using the authentication data generation algorithm and at least the secret key, as input to the authentication data generation algorithm;
- f1) comparing, by the second device, the second authentication data to the broadcast first authentication data; and
- g1) authenticating, by the second device, the first device only if the second authentication data matches the broadcast first authentication data.

The principle of the invention consists in a first and a second device store both, a secret key and a predefined authentication data generation algorithm. The first device computes first authentication data by using the authentication data generation algorithm and at least the secret key, as input to the algorithm. Then, the first device broadcasts the first authentication data. At least a second device receives the broadcast data that includes the first authentication data. The second device computes second authentication data by using the authentication data generation algorithm and at least the secret key, as input to the algorithm. Then, the second device verifies whether the generated second authentication data does or does not match the broadcast first authentication data. In the affirmative, the second device authenticates successfully the first device.

The authentication data that is separately and commonly generated by the first and second devices allows verifying by the second device the authenticity of the first device.

The authenticity of the first device, as data broadcaster, is thus verified by a second device, as a broadcast data listener.

The invention solution enhances the authentication of a first device that is recognized as being present, through its broadcast data, in a close surrounding environment.

The first device may be a connectable device or non-connectable device.

The invention solution allows proving that the first device, as data broadcaster, is genuine and therefore not an impersonator.

The invention solution allows guaranteeing any listening second device to be in presence of a genuine first device.

Contrary to the aforementioned prior art solution, the invention solution allows protecting the first device notably from a replay attack of any standard advertising packet, as broadcast data, that originates from the first device.

Advantageously, the predetermined authentication data generation algorithm is replaced by a predetermined temporary authentication data generation algorithm. The b1), c1), e1), f1) and g1) steps are respectively replaced by:
- b2) generating, by the first device, first temporary authentication data by using the temporary authentication data generation algorithm, the secret key and a changing factor, as inputs to the temporary authentication data generation algorithm;
- c2) broadcasting, by the first device, the first temporary authentication data and the changing factor;
- e2) generating, by the second device, second temporary authentication data by using the temporary authentication data generation algorithm, the secret key and the broadcast changing factor, as inputs to the temporary authentication data generation algorithm;
- f2) comparing, by the second device, the second temporary authentication data to the broadcast first temporary authentication data; and
- g2) authenticating, by the second device, the first device only if the second temporary authentication data matches the broadcast first temporary authentication data.

According to a further aspect, the invention is a first device for authenticating to a second device.

According to the invention, the first device is configured to:
- share with the second device a secret key and a predetermined authentication data generation algorithm;
- generate first authentication data by using the authentication data generation algorithm and at least the secret key, as input to the authentication data generation algorithm; and
- broadcast the first authentication data.

The first device may be a BLE type device.

According to still a further aspect, the invention is a second device for authenticating a first device.

The second device may be a BLE type device.

According to the invention, the second device is configured to:
- share with the first device a secret key and a predetermined authentication data generation algorithm;
- scan broadcast data;
- generate second authentication data by using the authentication data generation algorithm and at least the secret key, as input to the authentication data generation algorithm;
- compare the second authentication data to the broadcast first authentication data; and
- authenticate the first device only if the second authentication data matches the broadcast first authentication data.

According to still a further aspect, the invention is a system for authenticating a first device to a second device.

According to the invention, the system includes the first device and at least the second device. The first device is configured to:
- share with the second device a secret key and a predetermined authentication data generation algorithm;
- generate first authentication data by using the authentication data generation algorithm and at least the secret key, as input to the authentication data generation algorithm; and
- broadcast the first authentication data;
and the second device is configured to:
- scan broadcast data;
- generate second authentication data by using the authentication data generation algorithm and at least the secret key, as input to the authentication data generation algorithm;
- compare the second authentication data to the broadcast first authentication data; and
- authenticate the first device only if the second authentication data matches the broadcast first authentication data.

### Brief description of the drawings:

Additional features and advantages of the invention will be more clearly understandable after reading a detailed description of one preferred embodiment of the invention, given as an indicative and non-limitative example, in conjunction with the following drawings:

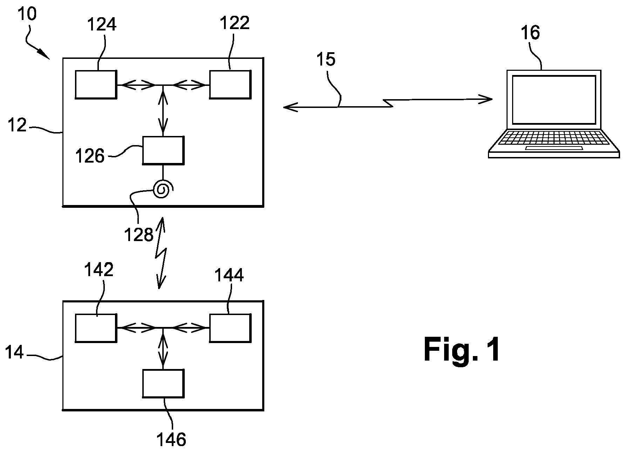

- Figure 1 illustrates a simplified diagram of one embodiment of a system with a (smart card) reader and a PC that both share a (secret) key and a predefined authentication data algorithm, the reader being adapted to generate first authentication data with the algorithm and the key and broadcast the first authentication data, the PC being configured to scan broadcast data, generate second authentication data with the algorithm and the key, compare the second to the first authentication data, and authenticate (or not), according to the comparison result, the reader, according to the invention; and

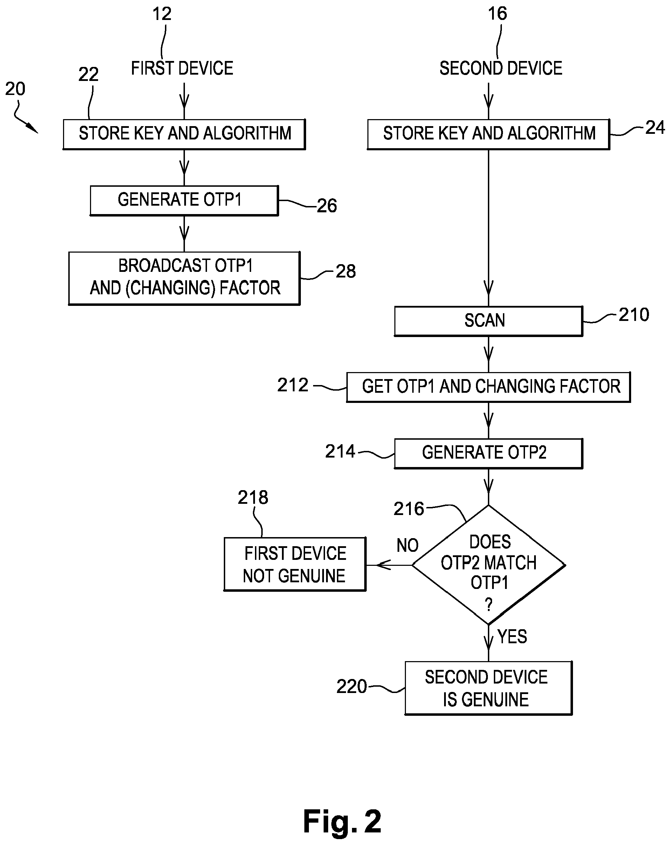

- Figure 2 represents an embodiment of one message flow between notably the reader and the PC of figure 1, in which the reader generates a One-Time Password (or OTP) 1 and broadcasts the OTP1 and a changing factor that has been also used to generate the OTP1, and the PC scans the broadcast data, generates, by also using the changing factor, an expected OTP2, compares the OTP2 and the OTP1 and authenticates (or not) successfully the reader if the OTP2 matches (or not respectively) the OTP1.

### Detailed description:

Herein under is considered a particular embodiment in which the invention method is implemented by using a smart card reader, as an SR RF enabled and first device, to authenticate to a PC, as another SR RF enabled and second device. The reader, as a chip host device, is coupled to a chip carried by a smart card, as a medium.The chip is preferably included within an SE. The SE may nevertheless have different form factors.

The invention does not impose any constraint as to a kind of the SE, when present.

As a removable SE, it may include a smart dongle of the Universal Serial Bus (or USB) type, a (micro) Secure Digital (or SD) type card, a Multi-Media type Card (or MMC), a Subscriber Identity Module (or SIM) type card or any format medium to be connected or coupled to a chip host device.

Alternatively, the SE incorporates, possibly in a removable manner, within a Printed Circuit Board (or PCB), the chip.

The PC, as second device, is a standalone entity, i.e. that does not cooperate with any SE, to implement the invention.

According to another embodiment (not represented), the PC cooperates with a chip, as an SE, that carries out the functions that are performed by the PC and described here after and in a more secure manner than by the PC without any SE, such as a Trusted Execution Environment (or TEE), as a secure area of a terminal processor and a secured runtime environment.

According to still another embodiment (not represented), the first device is a standalone entity, i.e. that does not cooperate with a chip, as an SE, that carries out the functions that are performed by the reader and chip and described here after and in a less secure manner than by the first device in cooperation with an SE.

Naturally, the described embodiment is only for exemplifying purposes and is not considered to reduce the scope of the invention.

**Figure 1** shows schematically a system 10 that includes a (smart card) reader 12, as a first device, and a PC 16, as a second device.

Instead of a reader, the first device may be a mobile phone, a portable device, such as a handheld computer, like e.g., a Personal Digital Assistant (or PDA), a palm-top computer, a laptop, a desktop, a PC, a Voice Over Internet Protocol (or VOIP) handset, a netbook, a tablet, a set-up box, a media player, a game console, a TeleVision (or TV) set, a machine of an M2M device, such as a vehicle computer, and/or an loT device.

The reader 12 is for example a smart badge holder, like e.g., a BLE smart card reader, such as a product termed SafeNet Reader CT1100 (or K1100) Gemalto Reader CT1100 (or K1100). The reader 12 may be a USB smart card dongle or any other communicating device.

The reader 12 may be equipped (or not) with an a Man Machine Interface (or MMI) or a limited MMI, like e.g., a led for indicating a power on, a led for indicating a pending (communication) session and/or a button to manage different modes (i.e. without any display screen).

The reader 12 includes one or several Central Processing Unit(s) (or CPU), (micro)processor(s) and/or (micro)controller(s) 122, as data processing means, one or several memories 124, as data storing means, and one or several Input/Output (or I/O) interfaces 126.

The (or each) reader processor 122 processes data originating from and/or intended to any internal component and data originating from and/or intended to any external device through one or several reader I/O interfaces.

The reader memories 124 may include one or several EEPROMs (acronym for "Electrically Erasable Programmable Read-Only Memory"), one or several ROMs (acronym for "Read Only Memory"), one or several Flash memories and/or any other memories of different types, like e.g., one or several RAMs (acronym for "Random Access Memory").

The reader 12 supports one (or several) Operating System(s) (or OS) and an application for communicating with the chip.

The reader 12 includes e.g., an antenna 126 allowing to communicate, in an SR RF manner, with one or several external devices, like e.g., the PC 16. The reader 12 is able to use e.g., a BLE type protocol and/or any other SR RF communication protocol (s).

The reader 12 is able to broadcast data, such as (permanent or temporary) authentication data and possibly one (or several) parameter(s) to be used by a listening device(s), as further (besides a shared key) input(s) to a predefined (permanent or temporary) authentication data algorithm, to generate an expected (or reference) (permanent or temporary) authentication data.

The reader 12 is coupled (or incorporates), over a ContacT (or CT) or ContacTLess (or CTL) link 13, to e.g., a smart card.

The smart card is a chip medium that is removable from the reader 12.

The smart card includes a chip 14. The chip 14 comprises a (micro)processor(s) 142 (and/or a (micro)controller(s)), as data processing means, a memory(ies) 144, as data storing means, and one or several I/O interfaces 146 that are internally connected through a control and data bus 143.

The chip 14 (or the reader 12) is preferably able to generate, by using a predetermined (registered) key generation algorithm, one (or several) (secret) key(s).

The (or each) key is e.g., a random key, as a temporary or permanent key.

The (or each) key is used for generating authentication data, such as an OTP, as temporary authentication data that is valid for a predefined time period, such as 60 seconds (or permanent authentication data that is valid permanently).

The chip 14 (or the reader 12) store(s) preferably, at least in a temporary manner, the key. Once the key is used, the chip 14 (or the reader 12) may delete the stored key.

The reader 12 is able to share, preferably in a secure manner, with an interlocutor(s), like e.g., the PC 16 which is previously preferably paired with the reader 12, the key.

The chip 14 (or the reader 12) store(s) a generation algorithm for generating temporary (or permanent) authentication data, such as an OTP, as temporary authentication data (or permanent authentication data).

As temporary (or permanent) authentication data generation algorithm, it may be e.g. a Hashed Message Authentication Code (or HMAC) type algorithm or any other generation algorithm.

The chip 14 (or the reader 12) is preferably able to generate, by using a predetermined (registered) factor generation algorithm, one or several factors that have preferably to vary or change from time to time. Each factor is preferably valid only once or a limited number of times. The factor generation algorithm may be a random generation algorithm.

Alternately, instead of generating the factor(s), the chip 14 (or the reader 12) stores one or several predetermined factors.

The changing factor may be based on (current) time, a counter or a challenge response.

The changing factor may change after a changing time period, such as 60 seconds.

The chip 14 (or the reader 12) is arranged to generate, by using the (OTP) generation algorithm, the key and preferably the factor, as input(s) to the generation algorithm, first authentication data, such as a first OTP or OTP1.

The reader 12 is preferably able to communicate or broadcast the (or each) factor to an external device(s), so that the receiver(s) is(are) able to generate, separately (and commonly) one and the same temporary (or permanent) authentication data while using the factor, as input to the generation algorithm (and assuming that the receiver(s) also access(es) the key and the generation algorithm).

To broadcast data that includes the first (temporary or permanent) authentication data, and possibly other related data, such the factor(s) that may change from time to time, the reader 12 uses a standard advertising packet.

During a first time period, e.g. 10 seconds, the first (temporary) authentication data is broadcast with a first value and, during a second time period, the first (temporary) authentication data is broadcast with a second value.

During the first time period, e.g. 10 seconds, the associated (changing) factor is broadcast with a first value and, during the second time period, the associated (changing) factor is broadcast with a second value.

The advertising packet includes a device name, a Universally Unique IDentifier (or UUID) and a manufacturer data field.

According to one particular embodiment, the manufacturer data field includes the first (temporary or permanent) authentication data and possible other associated related data, such as a (changing or not) factor(s) (the one(s) used for generating the first (temporary or permanent) authentication data.

The manufacturer data field value may alternate the first (temporary or permanent) authentication data and each other associated related data item, so as to broadcast (or advertise) the first (temporary or permanent) authentication data or another associated related data item at a given time.

The manufacturer data field value comprises one bit value to indicate whether either the first (temporary or permanent) authentication data or another associated related data item, such as a (changing) factor is broadcast.

The first (temporary or permanent) authentication data that is thus broadcast has a length that is e.g. 2 bytes.

Instead of a PC, the second device may be a mobile phone, a portable device, such as a handheld computer, like e.g., a PDA, a palm-top computer, a laptop, a desktop, a VOIP handset, a netbook, a tablet, a set-up box, a media player, a game console, a TV set, a machine of an M2M device, such as a vehicle computer, and/or an loT device.

The PC 16 comprises one or several CPU(s), (micro)processor(s) and/or (micro)controller(s) (not represented), as data processing means, one or several memories (not represented), as data storing means, and one or several I/O interfaces (not represented).

The PC 16 incorporates (or is connected to) an SR RF antenna (not represented) allowing to communicate, e.g., through an SR RF link 15, i.e. in a CTL manner, with an external device(s), like e.g., the reader 12, as a device(s) to be authenticated.

The PC 16 is able to scan any data that is broadcast by a device that is sufficiently close to the PC 16 to receive the broadcast data.

The PC 16 is able, possibly after a data decryption, to extract from the broadcast data some data, such as temporary (or permanent) authentication data and possibly other data to be used as input parameter(s) to a predefined temporary (or permanent) authentication data algorithm.

The PC 16 is able to receive, preferably in a secure manner, from an interlocutor(s), like e.g., the reader 12 which is previously preferably paired with the PC 16, the (secret) key.

The PC 16 store(s) preferably, at least in a temporary manner, the key. Once the key is used, the PC 16 may delete the stored key.

The PC 16 store(s) the generation algorithm for generating temporary (or permanent) authentication data, such as an OTP, as temporary authentication data (or permanent authentication data).

According to an essential invention feature, the PC 16 is configured to generate second (temporary or permanent) authentication data by using the (temporary or permanent) authentication data generation algorithm, the key and possibly other broadcast data, such as a (changing) factor, as input(s) to (temporary or permanent) authentication data generation algorithm.

Once the second (temporary or permanent) authentication data, such as an OTP2, is generated, the PC 16 is arranged to compare the (generated) second (temporary or permanent) authentication data to the (broadcast) first (temporary or permanent) authentication data, such as the OTP1.

The PC 16 is adapted to authenticate (or not) the reader 12, as (local) interlocutor, if the (generated) second (temporary or permanent) authentication data matches (or does not match respectively) the (broadcast) first (temporary or permanent) authentication data.

The PC 16 is thus ensured that the interlocutor, such as the reader 12, is actually the one that it advertises (or discloses) to be (and not a replay attacker or the like).

**Figure 2** depicts an exemplary embodiment of a message flow 20 that involves notably the reader 12 and the PC 16.

In a particular embodiment, it is assumed that the reader 12 has sent to the PC 16 that are each in a range that is sufficiently close to the reader 12 to communicate separately and individually, in a CTL manner, with the PC 16 a (secret) key by using e.g. a BCCID APDU channel.

Alternately, the reader 12 and the PC 16 generate separately and commonly the (secret) key by using one and the same key generation algorithm while using one and the same input parameter(s).

It is assumed that the reader 12 and the PC 16 have been both provided with a predetermined (authentication data) generation algorithm, such as an OTP generation algorithm, like e.g. HMAC type algorithm.

The use of temporary authentication data is better than the use of permanent authentication data to better protect against a replay attack of data broadcast by the reader 12.

The reader 12 stores 22 the key and the OTP generation algorithm.

The OTP value has preferably to change from a first broadcasting time period to a second broadcasting time period.

The reader stores (not represented) preferably a changing factor generation algorithm, so as to generate a changing factor such as a first counter value that has to change from the first broadcasting time period to the second broadcasting time period.

The PC 16 also stores 24 the key and the OTP generation algorithm.

The reader 12 generates 26 an OTP1 by using the OTP generation algorithm and the key and preferably a first counter value, as the changing factor, as input(s) to the authentication data generation algorithm.

The reader 12 broadcasts 28 the OTP1 and preferably the first counter value, as the changing factor (when used to generate authentication data).

The PC 16 scans 210 to get broadcast data.

The PC 16 gets 212 the (broadcast) OTP1 and the (broadcast) first counter value, as the (broadcast) changing factor (when used to generate authentication data).

The PC 16 generates 214 an OTP2 by using the OTP generation algorithm and the key and preferably the (broadcast) first counter value, as the (broadcast) changing factor, as input(s) to the authentication data generation algorithm.

Then, the PC 16 checks 216 whether the OTP2 matches or not the OTP1.

In the negative, i.e. if the OTP2 does not match the OTP1, the PC 16 does not authenticate (successfully) the reader 12 that is therefore 218 not genuine.

In the affirmative, i.e. if the OTP2 matches the OTP1, the PC 16 authenticates (successfully) the reader 12 that is therefore 220 genuine.

Then, after the first time period, during a second time period, the reader 12 changes from a first to a second value of the changing factor, e.g. a second counter value. The reader 12 generates a corresponding OTP, e.g. OTP3. The reader 12 broadcasts the OTP3 and the second counter value. Then, after a scan, the PC 16 gets the OTP3 and the second counter value. The PC 16 generates a corresponding OTP, e.g. OTP4. Then, the PC 16 checks whether the OTP4 matches or not the OTP3. Only if the OTP4 matches the OTP3, the PC 16 authenticates the reader 12 that is genuine.

The invention solution allows authenticating an interlocutor and prevents the interlocutor from being impersonated.

## Claims

1. A method for authenticating a first device (12) to a second device (16), comprising:
- a1) sharing (22 and 24) by the first device with the second device a secret key and a predetermined authentication data generation algorithm;
- b1) generating (26), by the first device, first authentication data by using the authentication data generation algorithm and at least the secret key, as input to the authentication data generation algorithm;
- c1) broadcasting (28), by the first device, the first authentication data;
- d1) scanning (210), by the second device, broadcast data;
- e1) generating, by the second device, second authentication data by using the authentication data generation algorithm and at least the secret key, as input to the authentication data generation algorithm;
- f1) comparing (216), by the second device, the second authentication data to the broadcast first authentication data; and
- g1) authenticating (220), by the second device, the first device only if the second authentication data matches the broadcast first authentication data.

2. Method according to claim 1, wherein, the predetermined authentication data generation algorithm being replaced by a predetermined temporary authentication data generation algorithm, the b1), c1), e1), f1) and g1) steps are respectively replaced by:
- b2) generating, by the first device, first temporary authentication data by using the temporary authentication data generation algorithm, the secret key and a changing factor, as inputs to the temporary authentication data generation algorithm;
- c2) broadcasting, by the first device, the first temporary authentication data and the changing factor;
- e2) generating, by the second device, second temporary authentication data by using the temporary authentication data generation algorithm, the secret key and the broadcast changing factor, as inputs to the temporary authentication data generation algorithm;
- f2) comparing, by the second device, the second temporary authentication data to the broadcast first temporary authentication data; and
- g2) authenticating, by the second device, the first device only if the second temporary authentication data matches the broadcast first temporary authentication data.

3. Method according to claim 2, wherein, the b2) broadcast step lasting a first time period, the changing factor having a first value, during a second time period, the changing factor having a second value, the b2) c2), d1), e2), f2) and g2) steps are repeated with the second value, as a next value for the changing factor.

4. Method according to any of claims 2 and 3, wherein either the first temporary authentication data or the changing factor is broadcast at a given time.

5. Method according to any previous claim, wherein the broadcast first authentication data or the broadcast first temporary authentication data is included within a predetermined manufacturing data field, the manufacturing data field being comprised within a standard advertising packet.

6. Method according to claim 5, wherein the length relating to either the broadcast first authentication data or the broadcast first temporary authentication data is two bytes.

7. Method according to claim 5 or 6, wherein, one bit value within the manufacturing data field indicates whether the broadcast data is either the first temporary authentication data or the changing factor.

8. Method according to any of claim 2 to 7, wherein the changing factor is based on a time or a counter.

9. Method according to any of claims 2 to 8, wherein the predetermined temporary authentication data generation algorithm is based on a Hashed Message Authentication Code type algorithm.

10. A first device (12) for authenticating to a second device, **characterized in that** the first device is configured to:
- share with the second device a secret key and a predetermined authentication data generation algorithm;
- generate first authentication data by using the authentication data generation algorithm and at least the secret key, as input to the authentication data generation algorithm; and
- broadcast the first authentication data.

11. A second device (16) for authenticating a first device, **characterized in that** the second device is configured to:
- share with the first device a secret key and a predetermined authentication data generation algorithm;
- scan broadcast data;
- generate second authentication data by using the authentication data generation algorithm and at least the secret key, as input to the authentication data generation algorithm;
- compare the second authentication data to the broadcast first authentication data; and
- authenticate the first device only if the second authentication data matches the broadcast first authentication data.

12. A system (10) for authenticating a first device (12) to a second device (16), **characterized in that,** the system including the first device and at least the second device, the first device is configured to:
- share with the second device a secret key and a predetermined authentication data generation algorithm;
- generate first authentication data by using the authentication data generation algorithm and at least the secret key, as input to the authentication data generation algorithm; and
- broadcast the first authentication data; and
**in that** the second device is configured to:
- scan broadcast data;
- generate second authentication data by using the authentication data generation algorithm and at least the secret key, as input to the authentication data generation algorithm;
- compare the second authentication data to the broadcast first authentication data; and
- authenticate the first device only if the second authentication data matches the broadcast first authentication data.
